(19)

Europäisches Patentamt

European Patent Office

Office européen des brevets

(11) **EP 4 475 459 A1**

(12) **EUROPEAN PATENT APPLICATION**
published in accordance with Art. 153(4) EPC

(43) Date of publication:
**11.12.2024 Bulletin 2024/50**

(21) Application number: **22924789.5**

(22) Date of filing: **03.02.2022**

(51) International Patent Classification (IPC):
***H04B 10/291*** (2013.01)

(52) Cooperative Patent Classification (CPC):
**H04B 10/291**

(86) International application number:
**PCT/JP2022/004233**

(87) International publication number:
**WO 2023/148878 (10.08.2023 Gazette 2023/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Nippon Telegraph And Telephone Corporation**
  **Chiyoda-ku**
  **Tokyo 100-8116 (JP)**
• **NTT DOCOMO, INC.**
  **Tokyo 100-6150 (JP)**

(72) Inventors:
• **ITO Kota**
  **Musashino-shi, Tokyo 180-8585 (JP)**
• **TAKAHASHI Yuta**
  **Musashino-shi, Tokyo 180-8585 (JP)**

• **SUGA Mizuki**
  **Musashino-shi, Tokyo 180-8585 (JP)**
• **ARAI Takuto**
  **Musashino-shi, Tokyo 180-8585 (JP)**
• **SHIRATO Yushi**
  **Musashino-shi, Tokyo 180-8585 (JP)**
• **UCHIDA Daisei**
  **Musashino-shi, Tokyo 180-8585 (JP)**
• **TOSHINAGA Hideki**
  **Musashino-shi, Tokyo 180-8585 (JP)**
• **KITA Naoki**
  **Musashino-shi, Tokyo 180-8585 (JP)**
• **KISHIYAMA Yoshihisa**
  **Tokyo 100-6150 (JP)**
• **SUYAMA Satoshi**
  **Tokyo 100-6150 (JP)**

(74) Representative: **Brevalex**
**Tour Trinity**
**1 B Place de la Défense**
**92400 Courbevoie (FR)**

(54) **COMMUNICATION METHOD, COMMUNICATION DEVICE AND COMMUNICATION SYSTEM**

(57) A communication method, which is executed by a communication apparatus among a plurality of communication apparatuses connected in multiple stages includes steps of acquiring downlink optical signals having one or more wavelengths including a predetermined reception wavelength from a previous stage and transmitting a communication situation signal or an allocation request signal of the communication apparatus to the previous stage using uplink optical signals having one or more wavelengths including a predetermined transmission wavelength, selecting a downlink optical signal having the reception wavelength, acquiring an allocation control signal indicating allocation of the reception wavelength and the transmission wavelength from the selected downlink optical signal having the reception wavelength, updating the reception wavelength and the transmission wavelength in accordance with the acquired allocation control signal, and transmitting an uplink optical signal having the updated transmission wavelength to the previous stage.

EP 4 475 459 A1

FIG. 3

**Description**

[Technical Field]

The present invention relates to a communication method, a communication apparatus, and a communication system.

[Background Art]

A millimeter-wave band with which high-speed transmission can be performed is attracting attention. Because propagation loss is large in the millimeter-wave band, it is necessary to install wireless base stations with high density in a communication area. To install the wireless base stations with the high density, analog radio-over-fiber (RoF) may be applied to a communication system. By the analog RoF, functions of the wireless base station are separated into functions of an aggregate station and an extension station. By installing an extension station having a simple configuration in the communication area, a flexible and cost-effective wireless communication environment is implemented (see Non-Patent Document 1). Moreover, a communication system in which an aggregate station and a plurality of extension stations are connected in a cascade configuration so that the extension stations can be installed more easily has been considered (see Non-Patent Document 2).

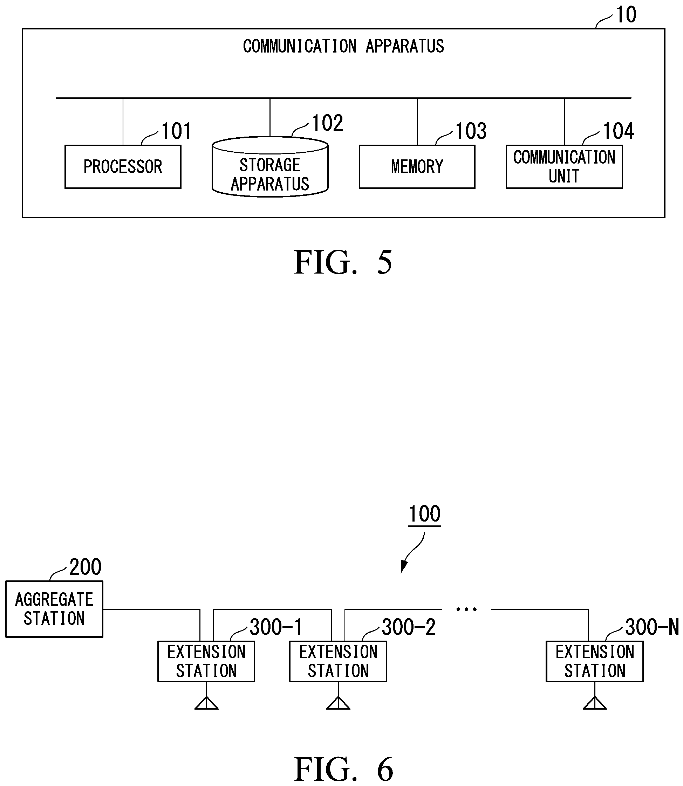

FIG. 6 is a diagram showing an example of a configuration of a communication system 100 disclosed in Non-Patent Document 2. The communication system 100 is a communication system to which the analog RoF is applied. The communication system 100 includes an aggregate station 200 and a plurality (N) of extension stations 300. The plurality of extension stations 300 have a cascade connection to the aggregate station 200 using a transmission path such as an optical fiber.

Hereinafter, a configuration of a side close to the aggregate station is referred to as a "previous stage." For example, an extension station 300-1 is a stage previous to an extension station 300-2. Hereinafter, a configuration on a side far from the aggregate station is referred to as a "subsequent stage." For example, an extension station 300-N is a stage subsequent to an extension station 300-(N-1).

Hereinafter, a direction from the extension station to the aggregate station is referred to as an "uplink." Hereinafter, a direction from the aggregate station to the extension station is referred to as a "downlink."

For each extension station 300, different wavelengths are allocated to an uplink optical signal and a downlink optical signal. The aggregate station 200 transmits the downlink optical signal to each extension station 300. The aggregate station 200 receives the uplink optical signal from each extension station 300.

The extension station 300 receives an optical signal from the aggregate station 200 via each extension station 300 in the previous stage. The extension station 300 generates a radio signal on the basis of an optical signal having a wavelength allocated to a downlink optical signal of the own station. The extension station 300 executes downlink wireless communication with a terminal (not shown) using the generated radio signal.

The extension station 300 executes uplink wireless communication with the terminal (not shown). The extension station 300 generates an optical signal having a wavelength allocated to an uplink optical signal of the own station in accordance with a radio signal received from the terminal (not shown). The extension station 300 transmits the generated optical signal to the aggregate station 200 via each extension station 300 in the previous stage.

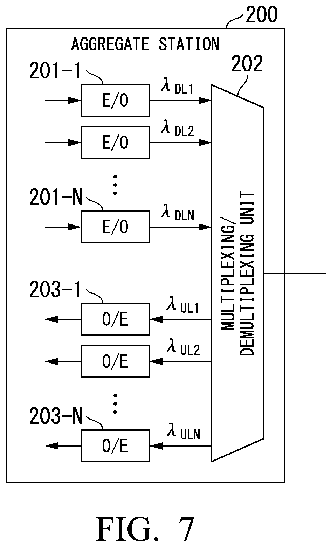

FIG. 7 is a diagram showing an example of a configuration of the aggregate station 200. The aggregate station 200 includes N conversion units 201, a multiplexing/demultiplexing unit 202, and N conversion units 203. A transmission signal for the extension station 300-n is input to the conversion unit 201-n ("n" is any one of the integers from "1" to "N"). The conversion unit 201-n converts a transmission signal (electrical signal) for the extension station 300-n into an optical signal having a wavelength "$\lambda_{DLn}$." The N conversion units 201 output optical signals having wavelengths from a wavelength "$\lambda_{DL1}$" to a wavelength "$\lambda_{DLN}$" to the multiplexing/demultiplexing unit 202.

The optical signals having the wavelengths from the wavelength "$\lambda_{DL1}$" to the wavelength "$\lambda_{DLN}$" are input from the N conversion units 201 to the multiplexing/demultiplexing unit 202. The multiplexing/demultiplexing unit 202 transmits the optical signals having the wavelengths from the wavelength "$\lambda_{DL1}$" to the wavelength "$\lambda_{DLN}$" to the extension stations 300 using a transmission path such as an optical fiber.

Optical signals having wavelengths from a wavelength "$\lambda_{UL1}$" to a wavelength "$\lambda_{ULN}$" are input from a plurality (N) of extension stations 300 to the multiplexing/demultiplexing unit 202. The multiplexing/demultiplexing unit 202 demultiplexes the optical signals having the wavelengths from the wavelength "$\lambda_{UL1}$" to the wavelength "$\lambda_{ULN}$" into the conversion units 203 associated with the wavelengths. The conversion unit 203-n converts an optical signal having a wavelength "$\lambda_{ULn}$" from the extension station 300-n into a received signal (electrical signal). Each of the N conversion units 203 outputs a received signal for each wavelength "$\lambda_{ULn}$" to a predetermined apparatus (not shown).

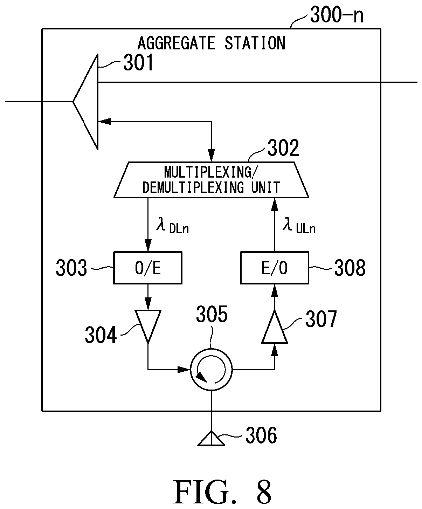

FIG. 8 is a diagram showing an example of a configuration of the extension station 300. The extension station 300 includes an optical splitter 301, a multiplexing/demultiplexing unit 302, a conversion unit 303, an amplifier 304, a circulator 305, an antenna 306, an amplifier 307, and a conversion unit 308.

The optical splitter 301 may be an even branch splitter or an uneven branch splitter. For all the extension stations 300, the performance of the optical splitter 301 provided in the extension station 300 is the same. Moreover, for all the extension stations 300, the performance of the optical splitter 301 is fixed.

The optical splitter 301 branches the optical signal input from a previous-stage extension station 300 into a subsequent-stage extension station 300 and the multiplexing/demultiplexing unit 302. The optical splitter 301 outputs an optical signal input from the subsequent-stage extension station 300 to the previous-stage extension station 300.

An optical signal branched by the optical splitter 301 is input to the multiplexing/demultiplexing unit 302. The multiplexing/demultiplexing unit 302 demultiplexes the wavelength of the optical signal branched by the optical splitter 301 to separate an optical signal having the wavelength "$\lambda_{DLn}$" allocated to the downlink optical signal of the own station.

An optical signal having a wavelength "$\lambda_{ULn}$" allocated to the uplink optical signal of the own station is input from the conversion unit 308 to the multiplexing/demultiplexing unit 302. The multiplexing/demultiplexing unit 302 outputs the optical signal having the wavelength "$\lambda_{ULn}$" to the optical splitter 301.

The conversion unit 303 converts the optical signal having the wavelength "$\lambda_{DLn}$" into an electrical signal. The amplifier 304 amplifies electric power of the electrical signal input from the conversion unit 303. The circulator 305 applies a voltage to the antenna 306 in accordance with the electrical signal whose electric power is amplified by the amplifier 304. The circulator 305 outputs the electrical signal input from the antenna 306 to the amplifier 307.

The antenna 306 transmits a radio signal in accordance with the voltage applied from the circulator 305. The antenna 306 receives a radio signal from a terminal (not shown) that executes wireless communication. The antenna 306 outputs an electrical signal corresponding to the received radio signal to the circulator 305.

The amplifier 307 amplifies electric power of the electrical signal input from the circulator 305. The conversion unit 308 converts the electrical signal into an optical signal having a wavelength "$\lambda_{ULn}$." The conversion unit 308 outputs the optical signal having the wavelength "$\lambda_{ULn}$" to the multiplexing/demultiplexing unit 302.

[Citation List]

[Non-Patent Documents]

[Non-Patent Document 1]
Kota Ito, Mizuki Suga, Yushi Shirato, Naoki Kita, and Takeshi Onizawa, Efficiently Accommodating High-frequency-band Wireless Systems by Using Analog Radio-over-fiber, NTT Technology Journal, 32(3), 15-17, 2020.
[Non-Patent Document 2]
E.-S. Kim, M. Sung, J. H. Lee, J. K. Lee, S.-H. Cho, and J. Kim, "Coverage Extension of Indoor 5G Network Using RoF-Based Distributed Antenna System," IEEE Access, vol. 8, pp. 194992-194999, 2020.

[Summary of Invention]

[Technical Problem]

Communication resources allocated to each extension station remain unchanged. For example, the wavelength of the optical signal is still allocated to the extension station that is not performing communication with the terminal. Moreover, because the branch of the optical signal from the optical splitter is fixed, the distribution of optical power to each extension station is fixed. For this reason, there is a problem that it is not possible to suppress the ineffective use of communication resources allocated to the extension station.

In view of the above circumstances, an objective of the present invention is to provide a communication method, a communication apparatus, and a communication system capable of suppressing the ineffective use of communication resources allocated to an extension station.

[Solution to Problem]

According to an aspect of the present invention, there is provided a communication method, which is executed by a communication apparatus among a plurality of communication apparatuses connected in multiple stages, the communication method including steps of: acquiring downlink optical signals having one or more wavelengths including a predetermined reception wavelength from a previous stage and transmitting a communication situation signal or an allocation request signal of the communication apparatus to the previous stage using uplink optical signals having one or more wavelengths including a predetermined transmission wavelength; selecting a downlink optical signal having the reception wavelength; acquiring an allocation control signal indicating allocation of the reception wavelength and the transmission wavelength from the selected downlink optical signal having the reception wavelength; updating the reception wavelength and the transmission wavelength in accordance with the acquired allocation control signal; and transmitting an uplink optical signal having the updated transmission wavelength to the previous stage.

According to an aspect of the present invention, there is provided a communication apparatus including: a previous-stage transfer unit configured to acquire downlink optical signals having one or more wavelengths including a predetermined reception wavelength from a previous stage and transmit a communication situation signal or an allocation request signal of the communication apparatus to the previous stage using uplink optical signals having one or more wavelengths including a predetermined transmission wavelength; a selection unit configured to select a downlink optical signal having the reception wavelength; a reception unit configured to acquire an allocation control signal indicating allocation of the reception wavelength and the transmission wavelength from the selected downlink optical signal having the reception wavelength; an extension-station-specific control unit configured to update the reception wavelength and the transmission wavelength in accordance with the acquired allocation control signal; and a transmission unit configured to transmit the uplink optical signals having the one or more wavelengths including the updated transmission wavelength to the previous stage using the previous-stage transfer unit.

According to an aspect of the present invention, there is provided a communication system including a first-stage aggregate station and a plurality of extension stations connected in multiple stages including a last stage, wherein the aggregate station includes an aggregate-station-specific transmission unit configured to transmit downlink optical signals having one or more wavelengths including a predetermined reception wavelength to the plurality of extension stations; an aggregate-station-specific reception unit configured to acquire uplink optical signals having one or more wavelengths, including a predetermined transmission wavelength, from the plurality of extension stations; and an aggregate-station-specific control unit configured to generate an allocation control signal indicating allocation of the reception wavelength and the transmission wavelength on the basis of a communication situation signal or an allocation request signal of the extension station and include the allocation control signal in the downlink optical signals having the one or more wavelengths including the reception wavelength, and wherein the extension station includes a previous-stage transfer unit configured to acquire downlink optical signals having one or more wavelengths including the reception wavelength from a previous stage and transmit a communication situation signal or an allocation request signal of the extension station to the previous stage using uplink optical signals having one or more wavelengths including the transmission wavelength; a selection unit configured to select a downlink optical signal having the reception wavelength; an extension-station-specific reception unit configured to acquire the allocation control signal from the selected downlink optical signal having the reception wavelength; an extension-station-specific control unit configured to update the reception wavelength and the transmission wavelength in accordance with the acquired allocation control signal; and an extension-station-specific transmission unit configured to transmit the uplink optical signals having the one or more wavelengths including the updated transmission wavelength to the previous stage using the previous-stage transfer unit.

[Advantageous Effects of Invention]

According to the present invention, it is possible to suppress the ineffective use of communication resources allocated to the extension station.

[Brief Description of Drawings]

FIG. 1 is a diagram showing an example of a configuration of a communication system in an embodiment.
FIG. 2 is a diagram showing an example of a configuration of an aggregate station in an embodiment.
FIG. 3 is a diagram showing an example of a configuration of an extension station in an embodiment.
FIG. 4 is a sequence diagram showing an example of an operation of the communication system in an embodiment.
FIG. 5 is a diagram showing an example of a hardware configuration of a communication apparatus in an embodiment.
FIG. 6 is a diagram showing an example of a configuration of the communication system disclosed in Non-Patent Document 2.
FIG. 7 is a diagram showing an example of a configuration of an aggregate station.
FIG. 8 is a diagram showing an example of a configuration of an extension station.

[Description of Embodiments]

(Overview)

A communication system includes a plurality of extension stations having a cascade connection (multistage connection) using an optical fiber and an aggregate station. For example, analog RoF is applied to a communication system. Here, the aggregate station dynamically controls the allocation (distribution) of communication resources to each extension station as centralized control. The communication resources are, for example, a wavelength and light intensity of an optical signal. Each extension station may dynamically control the allocation of communication resources for each extension station as autonomous control.

At least one of the aggregate station and the extension stations executes a process in the following procedure of steps (1) to (4) shown as an example.

(1) Acquisition of communication situation (communication state) of extension station

A control unit of the extension station acquires information about a communication situation of at least the own station (own communication apparatus) among the plurality of extension stations in the communication system. The information about the communication situation of the own station is, for example, information indicating whether or not there is a terminal communicating with the own station.

(2) Feedback of communication situation of extension station

(2-1) When centralized control by the aggregate station is executed, each extension station transmits the communication situation of each extension station to the aggregate station.

(2-2) When autonomous control by the extension station is executed, the control unit of each extension station derives an allocation amount of communication resources for the own station (for example, the number of wavelengths of the optical signal) on the basis of at least the communication situation of the own station. For example, the control unit of the extension station that does not perform communication with the terminal deletes the allocation amount of communication resources for the own station. For example, the control unit of each extension station that is performing communication with many terminals requests the aggregate station to add an allocation amount of communication resources for the own station in relation to a downlink optical signal. In addition, the control unit of each extension station may add an allocation amount of communication resources for the own station in accordance with a communication situation of each of the other extension stations and the communication situation of the own station without requesting the aggregate station to add an allocation amount in relation to the uplink optical signal.

(3) Determination of allocation amount of communication resources (allocation state)

The aggregate station determines whether or not the allocation amount of communication resources for each extension station is sufficient. For example, it is determined whether or not communication resources have been allocated to the extension station that is not performing communication with the terminal. It is determined whether or not an allocation amount of communication resources allocated to the extension station that is performing communication with a large number of terminals is sufficient.

(4) Reallocation of communication resources

The aggregate station reallocates communication resources to each extension station on the basis of the communication situation of each extension station. For example, the aggregate station reduces an allocation amount of communication resources for the extension station that is not performing communication with the terminal. When autonomous control by the extension station is executed, the control unit of each extension station may reduce an allocation amount of communication resources for the own station without a control process of the aggregate station. For example, the aggregate station adds an allocation amount of communication resources to be allocated to an extension station that is performing communication with a large number of terminals.

As a result, it is possible to suppress the ineffective use of communication resources allocated to the extension station.

Embodiments of the present invention will be described in detail with reference to the drawings.

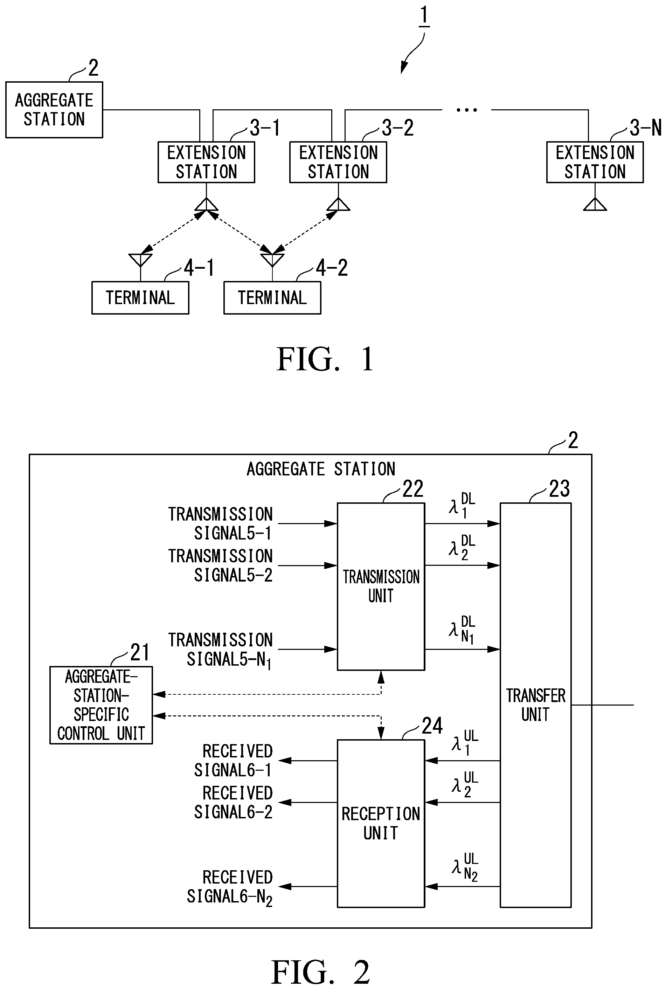

FIG. 1 is a diagram showing an example of a configuration of the communication system 1 in an embodiment. The communication system 1 is a communication system to which analog RoF is applied. The communication system 1 includes a first-stage aggregate station 2 and a plurality (N) of extension stations 3 connected in multiple stages including a last stage. The plurality of extension stations 3 have a cascade connection (multi-stage connection) to the aggregate station 2 using a transmission path such as an optical fiber. The communication system 1, for example, can be applied to a mobile fronthaul.

The number of optical fibers of the transmission path may be one or more. The optical fiber of the transmission path may be a single-core fiber or a multi-core fiber. One or more cascade configurations may be branched in the middle of the transmission path of the cascade configuration. Moreover, in a physical topology in which the extension station 3 is a node and the transmission path is an edge, a plurality of extension stations 3 may be connected in a loop shape using a transmission path. The communication system 1 may include an optical amplifier (not shown) in a cascade configuration including a plurality of extension stations 3 and a transmission path.

The distribution of communication resources allocated to each extension station 3 is dynamically controlled by at least one of the aggregate station 2 and the extension station 3 in accordance with a communication condition required for the communication system 1 and a communication situation of the extension station 3. Thereby, it is possible to suppress the ineffective use of communication resources allocated to the extension station 3. The communication resources are, for example, the number of wavelengths of the optical signal and the optical power of the optical signal.

The aggregate station 2 performs the downlink transmission of $N_1$ transmission signals to one or more extension stations 3 using optical signals having different wavelengths "$\lambda^{DL}$." The aggregate station 2 performs the uplink reception of $N_2$ received signals from one or more extension stations 3 using optical signals having wave-

lengths "$\lambda^{UL}$" different from each other.

The extension station 3 can execute wireless communication with one or more terminals 4. The terminal 4 can execute wireless communication with one or more extension stations 3. The extension station 3-1 executes optical communication with the aggregate station 2 using an optical signal. The extension station 3 other than the extension station 3-1 executes optical communication with the aggregate station 2 via the extension station 3 of a stage previous to the own station and the transmission path.

FIG. 2 is a diagram showing an example of a configuration of the aggregate station 2 in an embodiment. The aggregate station 2 includes an aggregate-station-specific control unit 21, a transmission unit 22, a transfer unit 23, and a reception unit 24.

The aggregate-station-specific control unit 21 controls each functional unit of the aggregate station 2. The aggregate-station-specific control unit 21 generates an allocation control signal on the basis of a predetermined communication condition. The allocation control signal, for example, indicates the allocation (distribution) of communication resources (each wavelength and optical power) to a plurality of extension stations 3. The aggregate-station-specific control unit 21 outputs the allocation control signal to the transmission unit 22.

The aggregate-station-specific control unit 21 acquires a communication situation signal from the reception unit 24. The communication situation signal includes, for example, a signal indicating the communication situation of each extension station 3. The communication situation is, for example, the number of terminals 4 communicating with each extension station 3. The communication situation may be, for example, a situation of a communication traffic volume at each extension station 3. The communication situation signal may include, for example, temperature information of the device of each extension station 3. The temperature of the device, for example, is proportional to the communication traffic volume.

The transmission unit 22 performs the downlink transmission of $N_1$ transmission signals to the transfer unit 23 using optical signals having wavelengths "$\lambda^{DL}$" different from each other. The $N_1$ transmission signals 5 may be main signals transmitted by the extension station 3 to the terminal 4 or may be allocation control signals transmitted by the aggregate station 2 to the extension station 3. The transmission unit 22 may multiplex the main signal and the allocation control signal into the transmission signal 5. The transmission unit 22 may multiplex a plurality of main signals and a plurality of allocation control signals into the transmission signal 5. The transmission unit 22 may multiplex a plurality of main signals and a timing signal into the transmission signal 5.

Optical signals having wavelengths "$\lambda^{DL}$" different from each other are input from the transmission unit 22 to the transfer unit 23. The transfer unit 23 multiplexes optical signals having wavelengths "$\lambda^{DL}$" different from

each other. The transfer unit 23 performs the downlink transmission of an optical signal after the multiplexing to one or more extension stations 3 using a transmission path.

The transfer unit 23 performs the uplink reception of optical signals having wavelengths "$\lambda^{UL}$" different from each other from the extension station 3-1. The optical signals having the wavelengths "$\lambda^{UL}$" different from each other may be optical signals transmitted from a plurality of extension stations 3 having a cascade connection. The transfer unit 23 demultiplexes the optical signals having the wavelengths "$\lambda^{UL}$" different from each other from a received uplink optical signal. The transfer unit 23 transmits the optical signals having the wavelengths "$\lambda^{UL}$" different from each other to the reception unit 24.

The reception unit 24 performs the uplink reception of $N_2$ received signals 6 from the transfer unit 23 using optical signals having wavelengths "$\lambda^{UL}$" different from each other. A main signal and a communication situation signal may be multiplexed into the received signal 6. A plurality of main signals and a plurality of communication situation signals may be multiplexed into the received signal 6.

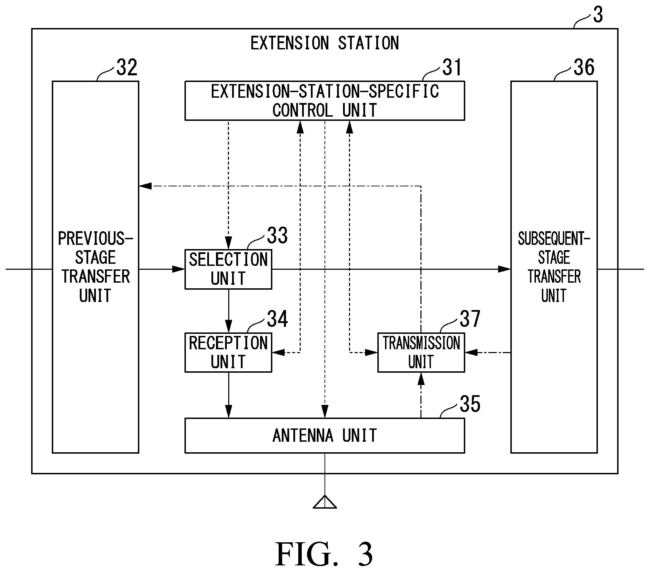

FIG. 3 is a diagram showing an example of a configuration of the extension station 3 in an embodiment. The extension station 3 includes an extension-station-specific control unit 31, a previous-stage transfer unit 32, a selection unit 33, a reception unit 34, an antenna unit 35, a subsequent-stage transfer unit 36, and a transmission unit 37.

In FIG. 3, a downlink signal line for the main signal and the allocation control signal is indicated by a solid-line arrow. An uplink signal line for the main signal and the communication situation signal is indicated by a single-dot-dashed-line arrow. Moreover, a signal line for the extension station control signal is indicated by a dashed-line arrow. The extension station control signal is a control signal for the functional unit of the extension station 3.

In the extension station 3, the downlink signal line for the main signal and the allocation control signal and the uplink signal line for the communication situation signal are independent of each other. For this reason, even if the main signal is congested, it is possible to transmit and receive the communication situation signal.

In the extension station 3, the downlink signal line for the main signal and the allocation control signal and the signal line for the extension station control signal are independent of each other. For this reason, even if the main signal is congested, the extension-station-specific control unit 31 can transmit and receive the extension station control signal.

At least one of a previous-stage transfer unit 32 and a subsequent-stage transfer unit 36 may include an optical amplifier. The optical amplifier compensates for the optical loss of the optical signal by amplifying a light intensity of the optical signal transmitted through the transmission path. Thereby, it is possible to increase the number of extension stations 3 connected using a transmission path.

The extension-station-specific control unit 31 controls an operation of each functional unit of the extension station 3. The extension-station-specific control unit 31 inputs an extension station control signal to the reception unit 34. The extension station control signal, for example, is multiplexing information for separating signals multiplexed into the transmission signal of the aggregate station 2 in the reception unit 34.

The previous-stage transfer unit 32 of the extension station 3-1 acquires optical signals having at least some of wavelengths from a wavelength " $\lambda_1^{DL}$ " to a wavelength " $\lambda_{N_1}^{DL}$ " from the aggregate station 2 using an optical fiber. The previous-stage transfer unit 32 of the extension station 3-n (n ≥ 2) acquires optical signals having at least some of the wavelengths from the wavelength " $\lambda_1^{DL}$ " to the wavelength " $\lambda_{N_1}^{DL}$ " from an extension station 3-(n-1) using an optical fiber.

The previous-stage transfer unit 32 acquires optical signals having at least some of wavelengths from a wavelength " $\lambda_1^{UL}$ " to a wavelength " $\lambda_{N_2}^{UL}$ " from the transmission unit 37. The previous-stage transfer unit 32 of the extension station 3-1 transmits the optical signal acquired from the transmission unit 37 to the aggregate station 2 using an optical fiber. The previous-stage transfer unit 32 of the extension station 3-n (n ≥ 2) transmits the optical signal acquired from the transmission unit 37 to the extension station 3-(n-1) using an optical fiber.

The selection unit 33 selects at least some of wavelengths of the optical signal received by the previous-stage transfer unit 32 in a wavelength demultiplexing process in accordance with the extension station control signal acquired from the extension-station-specific control unit 31. The extension station control signal indicates, for example, a wavelength selected by the selection unit 33 (a wavelength allocated to a downlink optical signal addressed to the own station). The wavelength indicated in the extension station control signal is determined, for example, in accordance with the allocation control signal separated by the reception unit 34. The selection unit 33 outputs an optical signal of the selected wavelength (optical power) to the reception unit 34. The selection unit 33 outputs an optical signal having a wavelength that has not been selected (a wavelength other than a reception wavelength) to the subsequent-stage transfer unit 36.

The reception unit 34 (an extension-station-specific reception unit or an acquisition unit) acquires an optical signal having the selected wavelength from the selection unit 33. The reception unit 34 converts an optical signal having the selected wavelength into an electrical signal for each wavelength. When a plurality of main signals and a plurality of allocation control signals are multiplexed into the electrical signal after the conversion, the reception unit 34 separates the plurality of main signals and the plurality of allocation control signals from the transmission signal. The reception unit 34 outputs the separated allocation control signal (the allocation control signal transmitted from the aggregate station 2) to the extension-station-specific control unit 31. The reception unit 34 outputs the separated main signal to the antenna unit 35. When an optical signal having a plurality of wavelengths is selected by the selection unit 33, the reception unit 34 outputs a plurality of main signals to the antenna unit 35. When a plurality of main signals are multiplexed into an optical signal for each wavelength, the reception unit 34 outputs the plurality of main signals to the antenna unit 35.

The antenna unit 35 acquires the main signal transmitted to the terminal 4 from the reception unit 34. The antenna unit 35 may perform frequency conversion for the main signal acquired from the reception unit 34. The antenna unit 35 may generate a local signal required for the frequency conversion. The specifications of the local signal are predetermined.

The local signal required for frequency conversion may be supplied from the aggregate station 2 located away from the extension station 3 to the extension station 3. In this case, the local signal is generated by the extension-station-specific control unit 31 using a timing signal supplied from the aggregate station 2. The local signal generated using the timing signal is input from the extension-station-specific control unit 31 to the antenna unit 35. When the timing signal is a clock signal, the extension-station-specific control unit 31 generates a local signal using a timing signal that is a clock signal. The local signal generated in this way is input to the antenna unit 35 by the extension-station-specific control unit 31.

When the frequency of the timing signal and the frequency of the local signal are equal, a timing signal may be input from the reception unit 34 to the antenna unit 35. When the frequency of the timing signal and the frequency of the local signal are different, the extension-station-specific control unit 31 may generate a local signal by converting the frequency of the timing signal into a desired frequency (multiplication process). The local signal generated in this way is input to the antenna unit 35 by the extension-station-specific control unit 31.

The antenna unit 35 transmits the main signal to the terminal 4 using a downlink radio signal. The antenna unit 35 may transmit the frequency-converted main signal to the terminal 4. The antenna unit 35 may be an array antenna. The antenna unit 35 may control a beam direction in accordance with a control signal acquired from the extension-station-specific control unit 31.

The antenna unit 35 receives the main signal from the terminal 4 using an uplink radio signal. When the reception unit 34 outputs the plurality of main signals to the antenna unit 35, the antenna unit 35 transmits the plurality of main signals to the terminal 4 using a radio signal. When a plurality of main signals are transmitted to the terminal 4, the antenna unit 35 may form a multibeam. When a plurality of main signals are transmitted to the terminal 4, the antenna unit 35 may execute a multiple input multiple output (MIMO) process for transmission.

The antenna unit 35 acquires a main signal from the terminal 4 using a radio signal. The antenna unit 35 outputs the main signal (electrical signal) received from the terminal 4 to the transmission unit 37. The antenna unit 35 may perform frequency conversion for the main signal acquired from the terminal 4. The antenna unit 35 may output the frequency-converted main signal to the transmission unit 37. When a plurality of main signals are received from the terminal 4, the antenna unit 35 may form a multibeam. When a plurality of main signals are received from the terminal 4, the antenna unit 35 may execute a MIMO process for reception.

The subsequent-stage transfer unit 36 acquires optical signals of at least some of wavelengths from a wavelength " $\lambda_1^{UL}$ " to a wavelength " $\lambda_{N_2}^{UL}$ " from the selection unit 33. The extension station 3-n (n < N) acquires the optical signals of at least some of wavelengths from the wavelength " $\lambda_1^{UL}$ " to the wavelength " $\lambda_{N_2}^{UL}$ " from the subsequent-stage extension station 3-(n+1) using an optical fiber.

An optical signal having a wavelength not selected by the selection unit 33 is input to the subsequent-stage transfer unit 36. Thereby, the subsequent-stage transfer unit 36 transmits optical signals of at least some of wavelengths from the wavelength "$\lambda_{DL1}$" to the wavelength "$\lambda_{DLN}$" to the subsequent-stage extension station 3 using an optical fiber.

The transmission unit 37 (extension-station-specific transmission unit) acquires an extension station control signal from the extension-station-specific control unit 31. The extension station control signal indicates, for example, a communication situation of the own station and the terminal 4 and an internal state of the own station. The communication situation indicates, for example, the number of terminals 4 communicating with the own station. The internal state of the own station indicates, for example, the operating state and temperature of the device of the own station.

When the antenna unit 35 receives radio signals of a plurality of main signals from the terminal 4, the transmission unit 37 acquires the plurality of main signals (electrical signals) corresponding to the received radio signals from the antenna unit 35. The transmission unit 37 converts the main signal input from the antenna unit 35 and the communication situation signal input from the extension-station-specific control unit 31 into an optical signal of at least some of wavelengths from the wave-

length " $\lambda_1^{UL}$ " to the wavelength " $\lambda_{N_2}^{UL}$ ." This wavelength is determined in accordance with the extension station control signal. The extension station control signal indicates, for example, a wavelength allocated to the uplink optical signal of the own station.

When a plurality of main signals and a plurality of communication situation signals are input, the transmission unit 37 may convert each of the plurality of main signals and the plurality of communication situation signals into optical signals having a plurality of wavelengths. When the plurality of main signals and the plurality of communication situation signals are input, the transmission unit 37 may multiplex the plurality of main signals and the plurality of communication situation signals and convert the multiplexed signals into an optical signal of one wavelength.

The transmission unit 37 multiplexes the optical signal received from the subsequent-stage extension station 3 by the subsequent-stage transfer unit 36 and the optical signal converted from the main signal and the communication situation signal. The transmission unit 37 outputs an optical signal after the multiplexing to the previous-stage transfer unit 32. The optical signal after the multiplexing is transmitted to the previous-stage extension station 3 or the aggregate station 2 by the previous-stage transfer unit 32. In this way, the transmission unit dynamically controls the wavelength and optical power of the optical signal converted from the main signal and the communication situation signal.

Next, an example of an operation of the communication system 1 will be described.

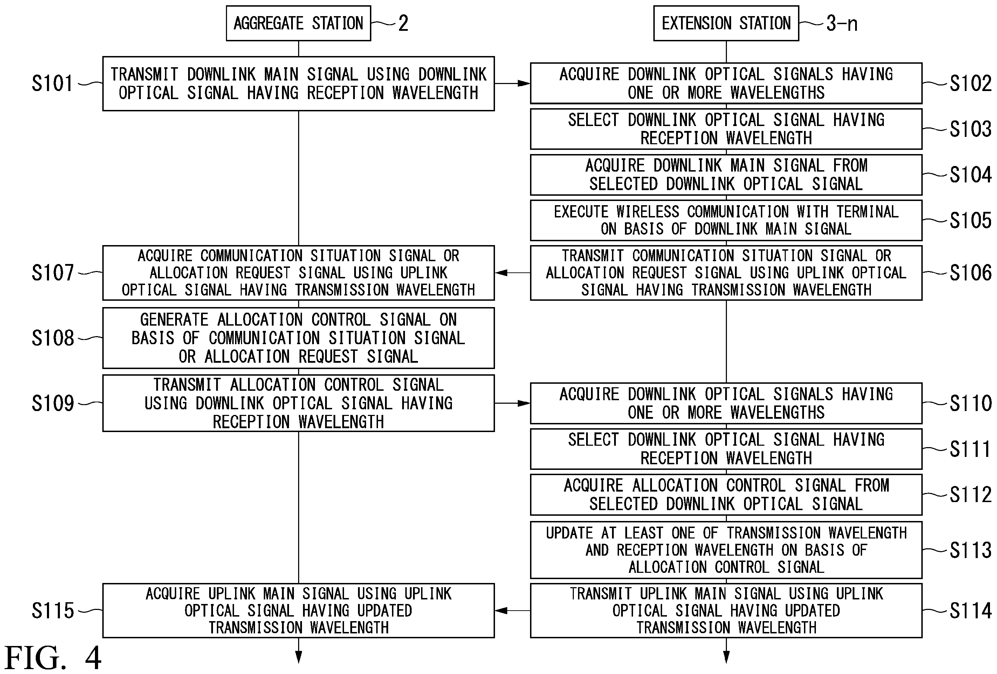

FIG. 4 is a sequence diagram showing an example of an operation of the communication system 1 in an embodiment. The aggregate station 2 transmits the downlink main signal to the subsequent stage using a downlink optical signal having a predetermined reception wavelength (step S101). The extension station 3-n acquires downlink optical signals having one or more wavelengths from the previous stage (the aggregate station 2 or the extension station 3-(n-1)) (step S102). The extension station 3-n selects a downlink optical signal having a predetermined reception wavelength from among the downlink optical signals having the one or more wavelengths (step S103).

The extension station 3-n acquires a downlink main signal from the selected downlink optical signal (step S104). The extension station 3-n executes wireless communication with the terminal 4 on the basis of the downlink main signal. The extension station 3-n may acquire the uplink main signal from the terminal 4 (step S105).

Hereinafter, a signal for requesting the allocation of the allocation amount of communication resources is referred to as an "allocation request signal." The extension station 3-n transmits a communication situation signal to the previous stage using an uplink optical signal having a transmission wavelength. As the execution of autonomous control by the extension station 3-n, the extension station 3-n derives an allocation amount (distribution) of communication resources related to the downlink optical signal in accordance with at least the communication situation of the own station. The extension station 3-n (the extension-station-specific control unit 31) generates an allocation request signal related to the downlink optical signal. The extension station 3-n may transmit an allocation request signal corresponding to the communication situation of the own station to the previous stage using an uplink optical signal having a transmission wavelength (step S106).

The aggregate station 2 acquires a communication situation signal from the extension station 3-1 using an uplink optical signal having a transmission wavelength. When autonomous control is executed by each extension station 3, the aggregate station 2 may acquire an allocation request signal related to the downlink optical signal from the extension station 3-1 using an uplink optical signal having a transmission wavelength (step S107). The aggregate station 2 generates an allocation control signal indicating the allocation of communication resources (each wavelength and optical power) to the extension station 3-n on the basis of the communication situation signal or the allocation request signal (step S 108). The aggregate station 2 transmits the allocation control signal to the subsequent stage using a downlink optical signal having a reception wavelength (step S109).

In addition, as the execution of autonomous control by the extension station 3-n, the extension station 3-n may derive an allocation amount (distribution) of communication resources related to the uplink optical signal in accordance with the communication situation of the own station. For example, when an amount of communication between the own station and the terminal 4 increases, the extension station 3-n increases an allocation amount of communication resources related to the uplink optical signal of the own station. In this case, as the execution of autonomous control by the extension station 3-n, the extension station 3-n may not request the aggregate station 2 to add an allocation amount of communication resources related to the uplink optical signal of the own station. The extension station 3-n may collect information about the communication situation of another extension station 3. The extension station 3-n may derive the allocation amount (distribution) of communication resources related to the uplink optical signal in accordance with the communication situation of the other extension station 3 and the communication situation of the own station. For example, when the uplink transmission amount of the optical signal between the other extension station 3 and the own station increases, the extension station 3-n increases the allocation amount of communication resources related to the uplink optical signal of the own station. In this case, as the execution of autonomous control by the extension station 3-n, the extension station 3-n may not request the aggregate station 2 to add the allocation amount of communication resources related to the uplink optical signal of the own station. Moreover, the extension station 3-n may notify the aggregate station 2 that the allocation amount related to the uplink optical signal of the extension station 3-n has been autonomously added by the extension station 3-n. In this way, the extension station 3-n autonomously adds the allocation amount of communication resources related to the uplink optical signal of the own station.

The extension station 3-n acquires downlink optical signals having one or more wavelengths from the previous stage (the aggregate station 2 or the extension station 3-(n-1)) (step S110). The extension station 3-n selects a downlink optical signal having a predetermined reception wavelength from among the downlink optical signals having one or more wavelengths (step S111). The extension station 3-n acquires an allocation control signal from the selected downlink optical signal (step S112).

The extension station 3-n updates at least one of a transmission wavelength and a reception wavelength by updating the extension station control signal of the own station on the basis of the allocation control signal. Here, the wavelength update includes not only changing the wavelength but also adding or deleting a wavelength (step S113). The extension station 3-n transmits the uplink main signal to the previous stage using the uplink optical signal having the updated transmission wavelength (step S114). The aggregate station 2 acquires the uplink main signal from the extension station 3-1 using the uplink optical signal having the updated transmission wavelength (step S115).

The aggregate station 2 transmits the downlink main signal to the subsequent stage using the downlink optical signal having the updated reception wavelength. The extension station 3-n acquires a downlink main signal using a downlink optical signal having an updated reception wavelength.

<Regarding downlink control>

As described above, the extension station 3-1 can extract an optical signal having a wavelength and optical power selected in accordance with the allocation control signal transmitted from the aggregate station 2 from the optical signal received from the aggregate station 2. The extension station 3-n (n ≥ 2) can extract an optical signal having a wavelength and optical power selected in accordance with the allocation control signal transmitted from the aggregate station 2 from the optical signal received from the previous-stage extension station 3-(n-1).

The aggregate-station-specific control unit 21 can allocate the wavelength and optical power of the downlink optical signal to the extension station 3 in accordance with the communication situation of each extension station 3. The extension-station-specific control unit 31 may autonomously generate allocation request information in accordance with the communication situation of the own station and the terminal 4. The transmission unit 37 may perform the uplink transmission of the allocation request information to the aggregate station 2. The aggregate station 2 can allocate the wavelength and optical power of the optical signal to the extension station 3 in accordance with the allocation request information autonomously generated by each extension station 3.

The aggregate-station-specific control unit 21 preferentially allocates many wavelengths and optical power to the downlink optical signal of the extension station 3 communicating with the terminals 4, wherein the number of terminals 4 is larger than or equal to a threshold value. The aggregate-station-specific control unit 21 may lower a priority level of allocation of the wavelength and optical power to the extension station 3 communicating with the terminals 4, wherein the number of terminals 4 is smaller than the threshold value. For example, the wavelength and optical power may not be allocated to the extension station 3 communicating with the terminals 4, wherein the number of terminals 4 is smaller than the threshold value. The aggregate-station-specific control unit 21 may preferentially allocate many wavelengths and optical power to the extension station 3 in which the quality of communication with the terminal has deteriorated.

The aggregate-station-specific control unit 21 can also dynamically control the main signal and the allocation control signal multiplexed into a downlink optical signal having one wavelength. The aggregate-station-specific control unit 21 preferentially allocates many wavelengths and optical power to the downlink optical signal having the one wavelength with respect to the extension station 3 communicating with the terminals 4, wherein the number of terminals 4 is larger than or equal to the threshold value.

<Regarding uplink control>

As described above, the extension station 3-1 can control the wavelength and optical power of the optical signal to be transmitted to the aggregate station 2. The extension station 3-n (n ≥ 2) can control the wavelength and optical power of the optical signal to be transmitted to the previous-stage extension station 3-(n-1).

The aggregate-station-specific control unit 21 can allocate the wavelength and optical power of the uplink optical signal to the extension station 3 using the allocation control signal for each extension station 3. The extension-station-specific control unit 31 may autonomously generate allocation request information in accordance with the communication situation of the own station and the terminal 4. The transmission unit 37 may perform the uplink transmission of the allocation request information to the aggregate station 2.

The aggregate-station-specific control unit 21 preferentially allocates many wavelengths and optical power to the uplink optical signal of the extension station 3 communicating with the terminals 4, wherein the number of terminals 4 is larger than or equal to the threshold value. The aggregate-station-specific control unit 21 may lower a priority level of allocation of the wavelength and optical power to the extension station 3 communicating with the terminals 4, wherein the number of terminals 4 is smaller than the threshold value. For example, the wavelength and optical power may not be allocated to the extension station 3 communicating with the terminals 4, wherein the number of terminals 4 is smaller than the threshold value. The aggregate-station-specific control unit 21 may preferentially allocate many wavelengths and optical power to the extension station 3 in which the quality of communication with the terminal has deteriorated.

The aggregate-station-specific control unit 21 can also dynamically control the main signal and the allocation control signal multiplexed into an uplink optical signal of one wavelength. The aggregate-station-specific control unit 21 preferentially allocates many wavelengths and optical power to an uplink optical signal of one wavelength with respect to the extension station 3 communicating with the terminals 4, wherein the number of terminals 4 is larger than or equal to the threshold value.

As described above, the communication system 1 includes a first-stage aggregate station 2 and a plurality of extension stations 3 connected in multiple stages including a last stage. The transmission unit 22 (aggregate-station-specific transmission unit) transmits downlink optical signals having one or more wavelengths including a predetermined reception wavelength "$\lambda^{DL}$" to the plurality of extension stations 3 using the transfer unit 23. The reception unit 24 (aggregate-station-specific reception unit) acquires uplink optical signals having one or more wavelengths, including a predetermined transmission wavelength "$\lambda^{UL}$", from the plurality of extension stations 3. The aggregate-station-specific control unit 21 generates an allocation control signal indicating allocation of at least one of the reception wavelength and the transmission wavelength on the basis of a communication situation signal or an allocation request signal of the extension station 3. The aggregate-station-specific control unit 21 includes the allocation control signal in downlink optical signals having one or more wavelengths including the reception wavelength.

The previous-stage transfer unit 32 acquires downlink optical signals having one or more wavelengths including the reception wavelength from a previous stage. The previous-stage transfer unit 32 transmits a communication situation signal or an allocation request signal of the own station to the previous stage using uplink optical signals having one or more wavelengths including the transmission wavelength. The selection unit 33 selects a downlink optical signal having the reception wavelength. The reception unit 34 (extension-station-specific reception unit) acquires the allocation control signal from the selected downlink optical signal having the reception wavelength. The extension-station-specific control unit 31 updates the reception wavelength and the transmission wavelength in accordance with the acquired allocation control signal. The transmission unit 37 (extension-station-specific transmission unit) transmits the uplink optical signals having the one or more wavelengths including the updated transmission wavelength to the previous stage using the previous-stage transfer unit 32.

Thus, the distribution of communication resources allocated to each extension station 3 is dynamically controlled by at least one of the aggregate station 2 and the extension station 3 in accordance with a communication condition required for the communication system 1 and a communication situation of the extension station 3. Thereby, it is possible to suppress the ineffective use of the communication resources allocated to the extension station 3.

Because an appropriate resource distribution is executed as a whole of the communication system 1, it is possible to improve the communication quality of the communication system 1 as a whole. It is possible to reduce the power consumption of the communication system 1 as a whole. Moreover, it is easy to change the connection configuration of the extension station 3 (for example, to add the extension station 3 in the middle or at the end of the cascade configuration).

(Example of hardware configuration)

FIG. 5 is a diagram showing an example of a hardware configuration of the communication apparatus 10 in an embodiment. The communication apparatus 10 corresponds to at least one of the aggregate station 2 and the extension station 3. Some or all of the functional units of the communication apparatus 10 are implemented as software when a processor 101 such as a central processing unit (CPU) executes a program stored in the storage apparatus 102 having a non-volatile recording medium (non-transitory recording medium) and the memory 103. The program may be recorded on a computer-readable non-transitory recording medium. The computer-readable non-transitory recording medium is, for example, a non-transitory recording medium such as a flexible disk, a magneto-optical disc, a read-only memory (ROM), a portable medium of a compact-disc read-only memory (CD-ROM) or the like, or a storage apparatus of a hard disk built into a computer system. The communication unit 104 executes a predetermined communication process. The communication unit 104 may acquire data and a program.

In addition, all or some functions of the communication apparatus 10 may be implemented using hardware including an electronic circuit or circuitry such as a large-scale integrated circuit (LSI), an application-specific integrated circuit (ASIC), a programmable logic device (PLD), or a field-programmable gate array (FPGA).

Although embodiments of the present invention have been described above in detail with reference to the drawings, specific configurations are not limited to the embodiments and other designs and the like may also be included without departing from the spirit and scope of the present invention.

For example, by adding a configuration (e.g., a processor) required for digital processing to the communication system 1, the communication system 1 maybe applied to digital RoF such as a common public radio interface (CPRI) or enhanced common public radio interface (eCPRI). For example, the aggregate-station-specific control unit 21 may include a configuration necessary for digital processing.

For example, the communication system 1 may be applied to digital coherent transmission by adding a configuration (e.g., a laser oscillator) necessary for digital coherent transmission to the communication system 1. For example, at least one of the transmission unit 22, the reception unit 24, and the transfer unit 23 may include a configuration necessary for digital coherent transmission.

[Industrial Applicability]

The present invention is applicable to a communication system.

[Reference Signs List]

 1 Communication system
 2 Aggregate station
 3 Extension station
 4 Terminal
 5 Transmission signal
 6 Received signal
 10 Communication apparatus
 21 Aggregate-station-specific control unit
 22 Transmission unit
 23 Transfer unit
 24 Reception unit
 31 Extension-station-specific control unit
 32 Previous-stage transfer unit
 33 Selection unit
 34 Reception unit
 35 Antenna unit
 36 Subsequent-stage transfer unit
 37 Transmission unit
 101 Processor
 102 Storage apparatus
 103 Memory
 104 Communication unit
 100 Communication system
 200 Aggregate station
 201 Conversion unit
 202 Multiplexing/demultiplexing unit
 203 Conversion unit

300 Extension station
301 Optical splitter
302 Multiplexing/demultiplexing unit
303 Conversion unit
304 Amplifier
305 Circulator
306 Antenna
307 Amplifier
308 Conversion unit

**Claims**

1. A communication method, which is executed by a communication apparatus among a plurality of communication apparatuses connected in multiple stages, the communication method comprising steps of:

acquiring downlink optical signals having one or more wavelengths including a predetermined reception wavelength from a previous stage and transmitting a communication situation signal or an allocation request signal of the communication apparatus to the previous stage using uplink optical signals having one or more wavelengths including a predetermined transmission wavelength;
selecting a downlink optical signal having the reception wavelength;
acquiring an allocation control signal indicating allocation of the reception wavelength and the transmission wavelength from the selected downlink optical signal having the reception wavelength;
updating the reception wavelength and the transmission wavelength in accordance with the acquired allocation control signal; and
transmitting an uplink optical signal having the updated transmission wavelength to the previous stage.

2. The communication method according to claim 1, further comprising a step of transmitting a downlink optical signal having a wavelength other than the reception wavelength among the downlink optical signals having the one or more wavelengths including the reception wavelength to a subsequent stage.

3. A communication apparatus comprising:

a previous-stage transfer unit configured to acquire downlink optical signals having one or more wavelengths including a predetermined reception wavelength from a previous stage and transmit a communication situation signal or an allocation request signal of the communication apparatus to the previous stage using uplink optical signals having one or more wavelengths including a predetermined transmission wavelength;
a selection unit configured to select a downlink optical signal having the reception wavelength;
a reception unit configured to acquire an allocation control signal indicating allocation of the reception wavelength and the transmission wavelength from the selected downlink optical signal having the reception wavelength;
an extension-station-specific control unit configured to update the reception wavelength and the transmission wavelength in accordance with the acquired allocation control signal; and
a transmission unit configured to transmit the uplink optical signals having the one or more wavelengths including the updated transmission wavelength to the previous stage using the previous-stage transfer unit.

4. The communication apparatus according to claim 3, further comprising a subsequent-stage transfer unit configured to transmit a downlink optical signal having a wavelength other than the reception wavelength among the downlink optical signals having the one or more wavelengths including the reception wavelength to a subsequent stage.

5. A communication system including a first-stage aggregate station and a plurality of extension stations connected in multiple stages including a last stage,

wherein the aggregate station comprises
an aggregate-station-specific transmission unit configured to transmit downlink optical signals having one or more wavelengths including a predetermined reception wavelength to the plurality of extension stations;
an aggregate-station-specific reception unit configured to acquire uplink optical signals having one or more wavelengths, including a predetermined transmission wavelength, from the plurality of extension stations; and
an aggregate-station-specific control unit configured to generate an allocation control signal indicating allocation of the reception wavelength and the transmission wavelength on the basis of a communication situation signal or an allocation request signal of the extension station and include the allocation control signal in the downlink optical signals having the one or more wavelengths including the reception wavelength, and
wherein the extension station comprises

a previous-stage transfer unit configured to acquire downlink optical signals having one or more wavelengths including the reception wavelength from a previous stage and transmit a communication situation signal or an allocation request signal of the extension station to the previous stage using uplink optical signals having one or more wavelengths including the transmission wavelength;

a selection unit configured to select a downlink optical signal having the reception wavelength;

an extension-station-specific reception unit configured to acquire the allocation control signal from the selected downlink optical signal having the reception wavelength;

an extension-station-specific control unit configured to update the reception wavelength and the transmission wavelength in accordance with the acquired allocation control signal; and

an extension-station-specific transmission unit configured to transmit the uplink optical signals having the one or more wavelengths including the updated transmission wavelength to the previous stage using the previous-stage transfer unit.

FIG. 1

FIG. 2

FIG. 3

EXTENSION STATION — 3-n

AGGREGATE STATION — 2

S101 — TRANSMIT DOWNLINK MAIN SIGNAL USING DOWNLINK OPTICAL SIGNAL HAVING RECEPTION WAVELENGTH

S102 — ACQUIRE DOWNLINK OPTICAL SIGNALS HAVING ONE OR MORE WAVELENGTHS

S103 — SELECT DOWNLINK OPTICAL SIGNAL HAVING RECEPTION WAVELENGTH

S104 — ACQUIRE DOWNLINK MAIN SIGNAL FROM SELECTED DOWNLINK OPTICAL SIGNAL

S105 — EXECUTE WIRELESS COMMUNICATION WITH TERMINAL ON BASIS OF DOWNLINK MAIN SIGNAL

S106 — TRANSMIT COMMUNICATION SITUATION SIGNAL OR ALLOCATION REQUEST SIGNAL USING UPLINK OPTICAL SIGNAL HAVING TRANSMISSION WAVELENGTH

S107 — ACQUIRE COMMUNICATION SITUATION SIGNAL OR ALLOCATION REQUEST SIGNAL USING UPLINK OPTICAL SIGNAL HAVING TRANSMISSION WAVELENGTH

S108 — GENERATE ALLOCATION CONTROL SIGNAL ON BASIS OF COMMUNICATION SITUATION SIGNAL OR ALLOCATION REQUEST SIGNAL

S109 — TRANSMIT ALLOCATION CONTROL SIGNAL USING DOWNLINK OPTICAL SIGNAL HAVING RECEPTION WAVELENGTH

S110 — ACQUIRE DOWNLINK OPTICAL SIGNALS HAVING ONE OR MORE WAVELENGTHS

S111 — SELECT DOWNLINK OPTICAL SIGNAL HAVING RECEPTION WAVELENGTH

S112 — ACQUIRE ALLOCATION CONTROL SIGNAL FROM SELECTED DOWNLINK OPTICAL SIGNAL

S113 — UPDATE AT LEAST ONE OF TRANSMISSION WAVELENGTH AND RECEPTION WAVELENGTH ON BASIS OF ALLOCATION CONTROL SIGNAL

S114 — TRANSMIT UPLINK MAIN SIGNAL USING UPLINK OPTICAL SIGNAL HAVING UPDATED TRANSMISSION WAVELENGTH

S115 — ACQUIRE UPLINK MAIN SIGNAL USING UPLINK OPTICAL SIGNAL HAVING UPDATED TRANSMISSION WAVELENGTH

FIG. 4

COMMUNICATION APPARATUS — 10

PROCESSOR — 101

STORAGE APPARATUS — 102

MEMORY — 103

COMMUNICATION UNIT — 104

FIG. 5

100

AGGREGATE STATION — 200

EXTENSION STATION — 300-1

EXTENSION STATION — 300-2

...

EXTENSION STATION — 300-N

FIG. 6

FIG. 7

FIG. 8

## INTERNATIONAL SEARCH REPORT

| International application No. |
|---|
| **PCT/JP2022/004233** |

### A. CLASSIFICATION OF SUBJECT MATTER

*H04B 10/291*(2013.01)i
FI:   H04B10/291

According to International Patent Classification (IPC) or to both national classification and IPC

### B. FIELDS SEARCHED

Minimum documentation searched (classification system followed by classification symbols)

H04B10/291

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

IEEE Xplore

### C. DOCUMENTS CONSIDERED TO BE RELEVANT

| Category* | Citation of document, with indication, where appropriate, of the relevant passages | Relevant to claim No. |
|---|---|---|
| Y | KIM, Eon-Sang et al. Coverage Extension of Indoor 5G Network Using RoF-Based Distributed Antenna System. IEEE Access. vol. 8, IEEE, 26 October 2020, pages 194992-194999 section "II. CASCADED DISTRIBUTED ANTENNA SYSTEM", "III. EXPERIMENTAL SETUP AND RESULTS", fig. 2, 3, 4 | 1-5 |
| Y | JP 2017-73812 A (NIPPON TELEGR. & TELEPH. CORP.) 13 April 2017 (2017-04-13) paragraphs [0039], [0044], fig. 1, 3 | 1-5 |
| A | JP 2000-174730 A (TOSHIBA CORP.) 23 June 2000 (2000-06-23) entire text, all drawings | 1-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 March 2022** | **05 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/004233**

| Patent document cited in search report | | | Publication date (day/month/year) | Patent family member(s) | Publication date (day/month/year) |
|---|---|---|---|---|---|
| JP | 2017-73812 | A | 13 April 2017 | (Family: none) | |
| JP | 2000-174730 | A | 23 June 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KOTA ITO** ; **MIZUKI SUGA** ; **YUSHI SHIRATO** ; **NAOKI KITA** ; **TAKESHI ONIZAWA**. Efficiently Accommodating High-frequency-band Wireless Systems by Using Analog Radio-over-fiber. *NTT Technology Journal*, 2020, vol. 32 (3), 15-17

- **E.-S. KIM** ; **M. SUNG** ; **J. H. LEE** ; **J. K. LEE** ; **S.-H. CHO** ; **J. KIM**. Coverage Extension of Indoor 5G Network Using RoF-Based Distributed Antenna System. *IEEE Access*, 2020, vol. 8, 194992-194999